# EUROPEAN PATENT SPECIFICATION

(11) **EP 0 717 824 B1**
(45) Date of publication and mention of the grant of the patent: **17.03.1999**
(21) Application number: 94927571.3
(22) Date of filing: 06.09.1994
(51) Int. Cl.: F16L 47/02, B29C 45/14

(54) **IMPROVEMENTS IN OR RELATING TO PIPE FITTINGS**
VERBESSERUNGEN AN ROHRANSCHLÜSSEN
AMELIORATIONS APPORTEES A DES RACCORDS DE TUYAUX

(30) Priority: 06.09.1993 GB 9318452
(43) Date of publication of application: 26.06.1996
(73) Proprietor: UPONOR LIMITED, Blackwell, Nr. Alfreton, Derbyshire DE55 5JD (GB)
(72) Inventor: BOKOR, Shaun David, Wymeswold, Leicestershire LE12 6UL (GB); HARRISON, Gordon, South Normanton, Derbyshire DE55 2EB (GB); LEES, George Albert, Nottingham NG12 5HP (GB); GODFREY, Stuart Nigel, Nr. Ashbourne, Derbyshire DE6 3EL (GB); CHADBURN, Keith Samuel, Nottinghamshire NG17 3EX (GB); STREET, Ronald Arthur, Belper, Derbyshire DE56 4BT (GB); DICKINSON, Alan John, Kirby-in-Ashfield NG17 8NQ (GB)
(74) Representative: Hall, Robert Leonard
(86) International application number: EP9402973
(87) International publication number: WO9507432

(56) References cited:
- EP-A- 0 260 014
- DE-C- 3 411 179
- FR-A- 1 170 720
- GB-A- 2 272 663
- US-A- 5 277 456
- PATENT ABSTRACTS OF JAPAN vol. 14, no. 159 (M-0956) 28 March 1990 & JP,A,02 022 021 (SEKISUI CHEM CO LTD) 24 January 1990

## Description

### FIELD OF THE INVENTION

This invention relates to pipe fittings, and more particularly to composite pipe fittings and to methods for manufacturing such fittings.

### BACKGROUND TO THE INVENTION

Weldable pipe fittings generally comprise hollow thermoplastic fittings for connection to thermoplastic pipes or like members in which a portion of an inner peripheral wall of the fitting is arranged to be joined by fusion or "welding" to a portion of an outer peripheral wall of a pipe or like member. Electrofusion pipe fittings, with which the invention is particularly concerned, are those in which the fusion or "welding" is accomplished by means of an electrical heating element which is located at or adjacent to the boundary between the inner wall of the fitting and the outer wall of the pipe or like member.

Electrofusion pipe fittings usually comprise a hollow thermoplastic sleeve member, having an electrical heating element located about the inner wall thereof, so that when in use the fitting is placed in mating contact about a thermoplastic pipe or like member, and current is passed through the electrical heating element, the adjacent mating surfaces of the fitting and the pipe or like member melt, and fusion or "welding" of the surfaces takes place. Examples of electrofusion pipe fittings are described in UK Patent No. 1440713, and US Patent Nos. 3062940 and 3094452, the disclosures of which are incorporated herein by reference.

The vast majority of available electrofusion pipe fittings are in-line couplers, due to the present difficulty of manufacturing more complicated shapes such as reducers, tees and bends. This substantially limits the field of use of electrofusion pipe fittings.

Connectorising the ends of the electrical heating element of the pipe fitting has also proved a problem. The connection cannot normally be brought out through a stress region in the pressure containing area of the sleeve member since this may give rise to undesirable cracks or leaks during installation (fusion) or in service. A common solution is to provide raised electrical terminals on the outer peripheral surface of the sleeve member, in an area outside the pressure containing part of the structure, the terminals being surrounded by upstanding protective boss members. Examples of such connectorised electrofusion pipe fittings are described in UK Patents Nos. 2135746, 2135747, and European Patents Nos. 0260014, 0243062, 0353912 and 0189918, the disclosures of which are incorporated herein by reference.

Connectorised electrofusion pipe fittings of this type have been very successful in practice, but do have certain drawbacks. Firstly, they require to be injection moulded using very large injection moulding machines having very high clamping pressures. This is because the presence of the raised electrical terminals and the upstanding boss members necessitates the use of a longitudinally split mould and radial injection of the thermoplastic material. In addition, it is very difficult to make more complicated fittings such as reducers, tees and bends by this method.

Another solution to the problem is to use a bifilar or bridged conductor as the heating element in the fitting, but this vastly increases the possibility of an electrical short in the heating element during the fusion process.

European patent application no. 0521276, the disclosure of which is incorporated herein by reference, describes a reducing fitting for joining pipes with different diameters which has a wider part which can be butt-welded to the larger pipe and a narrower part having a resistance heater winding for welding to the smaller pipe. This fitting uses a bifilar heating element, and the disclosure does not address any of the problems outlined above.

In European Patent Application No. 0535247, there is described a pipe joint member for use in connecting the ends of synthetic resin pipes, which consists of one or more cylindrical socket members provided at one end with a fusion welding portion into which an end of a resin pipe is fitted and in which a heating coil is embedded, and with a connecting portion at the other end, and a piping component part having at least one opening, wherein the socket member is connected to an appropriate opening of the piping component part through the connecting portion. The pipe joint members disclosed in EPA 0535247 use raised electrical terminals, and the heating coils have to be separately energised, leading to complications both in manufacture and installation.

### SUMMARY OF THE INVENTION

The present invention provides various novel composite electrofusion pipe fittings formed by fusion or welding of sleeve members containing electric heating elements.

The invention further provides a novel electrofusion pipe fitting that is so shaped that it can be removed from the mould by relative axial movement, and a novel injection moulding process for the production of weldable pipe fittings.

The invention also provides a novel connectorised electrofusion pipe fitting in which the terminals are located in areas outside the pressure containing part of the structure without the use of two raised electrical terminals and which can avoid the use of a bifilar heating element.

According to a first aspect of the invention there is provided a composite electrofusion pipe fitting which comprises
a plurality of hollow thermoplastic sleeve members,
at least two of the sleeve members each having an electrical heating element located about the inner wall thereof, the two said electrical heating elements being electrically connected together,
and the sleeve members being joined to each other so as to leave those members provided with electrical heating elements available to receive pipes therein to be joined thereto by electrofusion.

The composite electrofusion pipe fitting can comprise, for example a junction, a tee, a bend, a reducer, or similar construction which would present problems for, or be expensive to produce by, injection moulding. Preferably each of the hollow thermoplastic sleeve members has an end region which can be joined to another sleeve member by melt fusion, and particularly butt fusion, to form a more complex structure. Although such butt fusion can be practised on site, it is more commonly carried out in the factory. Typically the hollow thermoplastic sleeve members themselves can be pipe couplers or reducing fittings or similar components.

According to another embodiment of the invention there is provided an electrofusion pipe fitting which comprises,
a hollow thermoplastic sleeve member,
an electrical heating element disposed within the hollow sleeve member,
electrical terminals disposed on an outer major surface of the hollow sleeve member and connected to the electrical heating element,
at least one such electrical terminal being disposed so as to lie in a substantially longitudinal direction with respect to the hollow sleeve member.

In a further embodiment of the invention, the electrical terminal which is disposed so as to lie in a substantially longitudinal direction with respect to the hollow sleeve member is located in a region which is outside the pressure containing region of the electrofusion pipe fitting.

In another aspect the invention provides a method of making a composite pipe fitting which comprises,
injecting molten thermoplastic polymeric material into a mould cavity defining a hollow sleeve member and formed by a hollow outer mould and a mould core at least one electrical terminal being disposed in the mould so as to lie in a substantially longitudinal direction with respect to the hollow sleeve member and being connected to a heating element disposed in the mould,
allowing the thermoplastic polymeric material to solidify, and removing the moulded hollow sleeve member from the hollow outer mould by relative axial movement there between and connecting together at least two of said hollow members and interconnecting said heating elements. Preferably the molten thermoplastic polymeric material is injected into the mould cavity in a longitudinal direction, rather than in a radial direction as has been practised hitherto. Longitudinal injection can be carried out using lower clamping pressures and can avoid the need to use a split outer mould.

### DETAILED DESCRIPTION OF THE INVENTION

The electrofusion pipe fittings of the invention comprise one or more hollow sleeve members which may be formed from any suitable thermoplastic polymeric material, for example an olefinically unsaturated polymeric material such as polyethylene, polypropylene, polybutylene, and higher olefinic polymers; copolymers of ethylene, propylene and butylene with each other and with other olefinically unsaturated monomers; olefinically unsaturated aromatic polymers such as polystyrene and styrene copolymers; and polymers and copolymers of vinyl monomers such as ethylenevinyl acetate copolymers, polycarbonates, and such like materials.

The or each hollow sleeve member may be of constant diameter throughout its length, but preferably comprises at least two regions of different diameter separated by a "step" region. In a preferred embodiment, the electrical heating element is disposed substantially entirely within the region of larger diameter, and the region of smaller diameter is therefore available to be connected, for example by melt fusion, and particularly by butt fusion, to another hollow member.

The electrical heating element preferably comprises a coil of resistance wire which is preferably disposed on or adjacent to an inner surface of the hollow sleeve member, and for example in a preferred construction, the electrical heating element is embedded in the wall of the hollow sleeve member adjacent the said inner surface. In an alternative construction, the electrical heating element may be a coil of resistance wire disposed in a helical groove machined on the inner surface of the hollow sleeve member. The resistance or impedance of the electrical heating element is such that, when powered by a direct or alternating current, the element will heat up causing local fusion of the inner surface of the hollow member, and in some cases local fusion of the outer surface of the pipe, so as to fuse the sleeve member to the pipe.

The electrical element is normally provided with two electrical terminals for connection to a suitable power source such as a generator. More than two such terminals may of course be provided if necessary. The terminals may be of any suitable type for the attachment of power cables or the like, and may have screw-on or push-on fittings as appropriate. The terminals are disposed on an outer surface of the hollow sleeve member and the connections to the electrical heating element are made through the thickness of the sleeve member.

At least one of the electrical terminals is disposed so as to lie in a substantially longitudinal direction with respect to the hollow sleeve member. This can conveniently be accomplished by arranging for the longitudinally-disposed electrical terminal to be positioned at a "step" region of the hollow sleeve member, where there is a change in diameter of the sleeve member. This enables a bus bar from the electrical heating element to extend substantially longitudinally from the larger diameter region of the sleeve member, having the electrical heating element disposed therein, through the wall of the sleeve member, to the longitudinally-disposed electrical terminal situated at an outer surface of the sleeve member in the smaller diameter region thereof. This preferred construction has a number of significant advantages as follows:
1. The distance across the wall between the electrical heating element and the electrical terminal can be increased, thereby reducing the stress concentration at the terminal exit point, without increasing the overall thickness of the sleeve member. The electrical terminal is thus located in a low stress area away from the pressure containing region of the electrofusion fitting.
2. The configuration of the sleeve member is such that the sleeve member can be axially removed from an injection mould.
3. The longitudinally-disposed electrical terminal is easy to connect to a similar terminal in a tee, bend, or the like, in a multi-part construction.

Preferably one or both of the terminals are positioned such that at least a portion of the terminal lies outside the wall of the sleeve member, that is, the terminal lies proud of the surface of the sleeve member. If the terminal is positioned wholly within the wall of the sleeve member, this requires a recess to be formed in the wall to accommodate a connector for the electric power source, which recess can be a point of weakness for the fitting leading to burst through of molten plastic, or to splitting of the sleeve.

Each of the terminals are preferably surrounded by a protective boss member, which may cooperate with the connector from the electric power source to form a coupling which firmly connects a lead from the power source to the terminal.

In the method of the invention, a weldable pipe fitting is produced by injection moulding and axial withdrawal of the product from the mould. The prior art fittings could not be made in this way due to the presence of recesses, or boss members, around the terminals, which necessitated the use of a split mould. In the present invention the weldable pipe fitting is configured in such a fashion that axial withdrawal is possible, preferably by the provision of at least one electrical terminal disposed so as to lie in a substantially longitudinal direction with respect to the pipe fitting. It is possible to have one of the terminals of the weldable pipe fitting which does not lie longitudinally or axially of the pipe fitting, but in such a case it is preferable for this terminal to be situated at an end of the fitting so that axial withdrawal of the moulded fitting can still be easily accomplished by withdrawing that end first, and so that the terminal is not situated in an area of the sleeve subject to high stress. The hollow sleeve member of the weldable pipe fitting is formed in a mould cavity comprising a hollow outer mould and a mould core. The outer mould may have recesses defining boss members for the terminals of the fitting, so as to permit longitudinal or axial withdrawal of the moulded fitting. The mould core may have means for winding the coil of the electrical heating element therein, or it may provide support for a metal former upon which the coil is wound before placement in the mould. In a still further possibility, the coil of the electrical heating element may be wound on a former and then embedded in a layer of thermoplastic material in a first moulding step. The embedded coil can then be removed from the former and placed in the mould for the final moulding step. Whichever route is taken, it will be apparent that it is necessary to connect the terminals to the electrical heating element before it is placed in the mould.

After axial injection of the molten thermoplastic material into the mould, and solidification thereof, the pipe fitting is ejected axially from the outer mould, starting at the end with the upstanding boss member, if present, by relative axial movement of the outer mould and the mould core. The pipe fitting can be separated from the outer mould and the mould core at the same time, or sequentially as desired. Any metal former present is usually separated from the fitting in a further operation.

As previously stated, two or more electrofusion pipe fittings according to the invention may be connected to form a composite fitting, which may be a junction, a coupler, a tee, a bend, or a similar fitting. The composite fitting can be formed by connection of one or more electrofusion pipe fittings according to the invention to a further component which may be, for example, a pipe or a bend without an electric heating element, or another such electrofusion fitting. Such composite fittings, formed, for example, by melt fusion of an electrofusion pipe fitting to a further component with or without an electric heating element can be made significantly more cheaply than hitherto.

Where two or more electrofusion pipe fittings of the invention are combined in a composite electrofusion fitting, it is a simple matter to link the electrical heating elements by means of the longitudinally-disposed electrical terminals using, for example, a conductive bus bar which may, if desired be plastic covered. The bus bar can, for example, comprise a metal rod which can also act as a carrying handle, or which can have a carrying handle attached thereto. Such electrical connection enables two or more electrical heating elements to be energised simultaneously, greatly simplifying installation procedures.

In a further embodiment of the invention, the electrofusion pipe fitting can be converted into a fitting having two upstanding electrical terminals by the use of an elbow adaptor terminal which plugs into the longitudinally-disposed electrical terminal of the fitting.

### BRIEF DESCRIPTION OF THE DRAWINGS

Various embodiments of electrofusion pipe fittings and an injection moulding method according to the invention will now be described with reference to, and as illustrated in the accompanying Drawings in which:
Figure 1 shows a sectional side elevation of the upper half of a first embodiment of an electrofusion pipe fitting according to the invention;
Figure 2 shows a sectional side elevation of the upper half of an injection mould for carrying out the method of the invention;
Figure 3 shows a top elevational view of a second flanged embodiment of an electrofusion pipe fitting according to the invention;
Figure 4 shows a top elevational view of a third bell-ended embodiment of an electrofusion pipe fitting according to the invention;
Figures 5, 6 and 7 show top elevational views of bends comprising composite fittings according to the invention;
Figures 8 and 9 show top elevational views of tees comprising composite fittings according to the invention;
Figure 10 shows a broken side elevation of an electrofusion pipe coupler according to the invention having a handle attached to the bus bar; and
Figure 11 shows a sectional side elevation of the top half of an electrofusion pipe fitting according to the invention provided with an elbow adaptor terminal.

### DETAILED DESCRIPTION WITH REFERENCE TO THE DRAWINGS

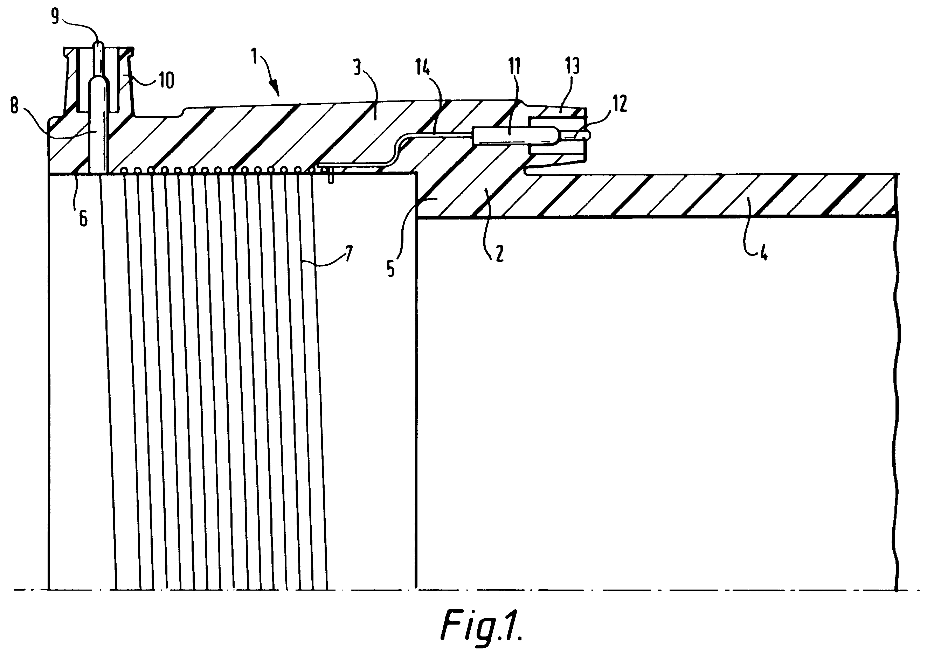

Referring now to Figure 1, the electrofusion pipe fitting 1, comprises a hollow cylindrical body member 2, having a large diameter portion 3 and a smaller diameter portion 4 separated by a step region 5. Within the inner wall 6 of the large diameter portion 5 there is embedded a heating element 7, comprising a plurality of turns of resistance wire. A first electrical terminal 8 is situated adjacent the end of the body member 2 and is connected to a first end of the heating element 7. The electrical terminal 8 extends through the wall of the body member 2 and protrudes above the outer surface thereof. The upper portion 9 of the electrical terminal is adapted to receive a connector from a power source (not shown) and is surrounded by an upstanding protective cylindrical boss member 10.

A second electrical terminal 11 extends in a longitudinal direction with respect to the axis of the cylindrical body member 2, from the step region 5 and over the smaller diameter portion 4 of the body member. The extending portion 12 of the second electrical terminal 11 is adapted to receive a connector from a power source (not shown) and is surrounded by a longitudinally-extending protective cylindrical boss member 13. The second electrical terminal 11 is connected to a second end of the heating element 7 via a bus bar 14 which passes through the shoulder region 5 of the body member.

The electrofusion pipe fitting 1 can be used as a pipe coupler or as a reducing fitting. When used as a pipe coupler, two such fittings are joined together, either directly or via a short length of pipe, by butt fusion of the smaller diameter portions 4. When used as a reducing fitting, the smaller diameter portion 4 is butt fused to the smaller of the pipes to be joined. In both cases, the heating elements are available for electrofusion to a larger diameter pipe inserted into the larger diameter portion 3 of the fitting.

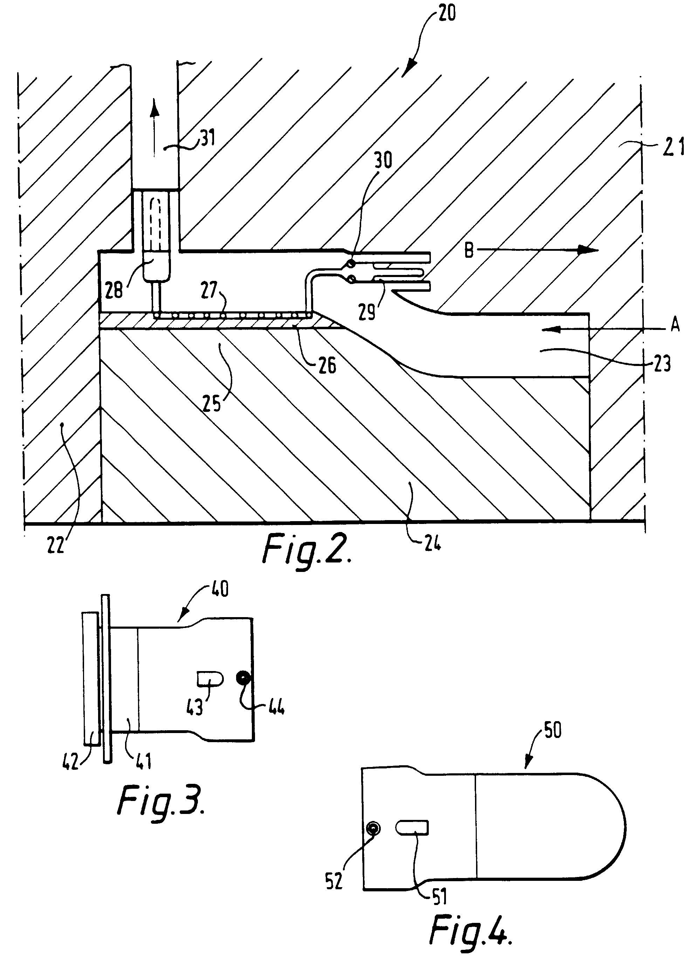

A weldable pipe fitting can be made using an injection mould as illustrated in Figure 2. The mould 20 has a movable portion 21 and a fixed portion 22 which together define a cylindrical mould cavity 23 having the stepped configuration as described in connection with Figure 1. The mould core 24 is connected to the fixed portion 22 of the mould, and is dimensioned, at its larger diameter portion 25, to receive a cylindrical metal former 26. The former 26 carries the heating element 27 together with its associated terminals 28 and 29. The longitudinally-disposed terminal 29 carries an "O" ring 30 to seal any leak path that may arise along the terminal. By positioning this "O" ring seal remote from the heating element 27, it is not subject to the localised pressures and distorting stresses associated with the heating of the region adjacent to the heating element in the fusion process. The radially-disposed terminal 28 is surrounded by a side action plunger 31 (shown in side elevation) which forms the wall of its surrounding boss member in the finished moulding.

In operation, molten thermoplastic material is injected axially into the mould cavity 23 in the direction indicated by the arrow A until the desired shot weight has been achieved. Moulding in the axial direction can replace the clamp pressure required by a factor of 2. After injection has been completed and the thermoplastic has solidified, the mould is opened by sliding the moving portion 21 in an axial direction as indicated by arrow B. It will be appreciated that because the terminal 29 is axially aligned, there is no impediment to this axial movement. The side action plunger 31 is then raised and the moulded fitting can be removed from the mould core 24 together with the metal former 26. The metal former is finally manually removed from the completed mould fitting.

Figure 3 shows a top view of a flanged stepped fitting 40 according to the invention, having at the end of its smaller diameter region 41, a flange 42, adapted to be connected to a similar flange of a pipe or tube. Terminals 43 and 44 are respectively longitudinally and radially disposed.

Figure 4 shows a bell-ended fitting 50 according to the invention, again having terminals 51 and 52, respectively longitudinally and radially disposed.

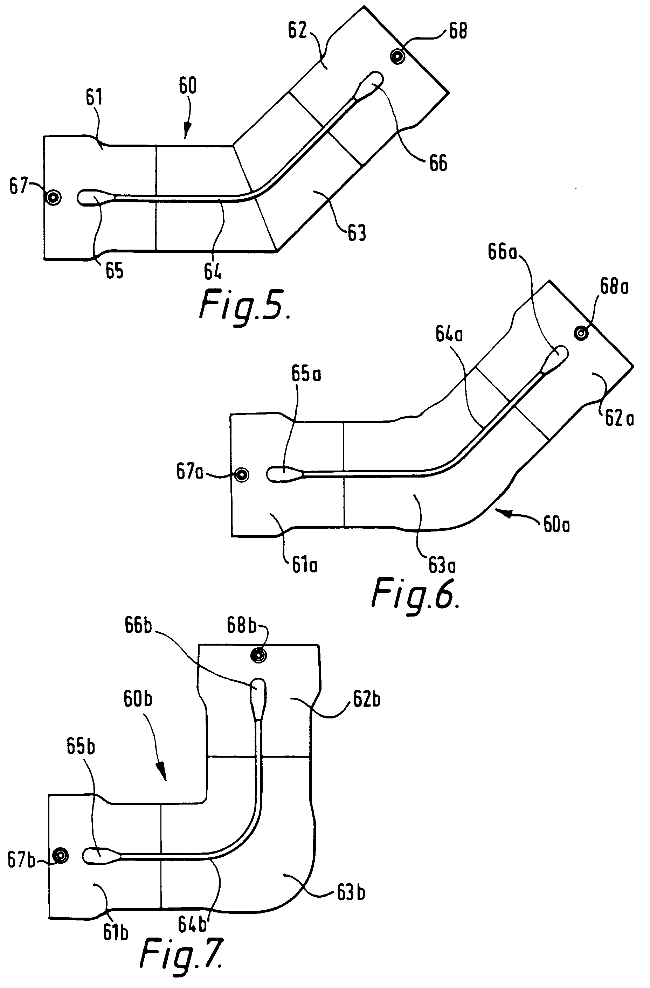

Figures 5, 6 and 7 show various couplers formed using two electrofusion fittings according to the invention joined by pipe bends. In each case the couplers 60, 60a and 60b are formed from fittings 61, 62, 61a, 62a, 61b, 62b, which have been butt fused to pipe bends 63, 63a, 63b. Bus bars 64, 64a and 64b extend between longitudinally-disposed terminals 65, 66, 65a, 66a, 65b, 66b respectively so that the heating elements in the two electrofusion fittings can be powered simultaneously by connecting a power source to terminals 67, 68, 67a, 68a and 67b, 68b respectively.

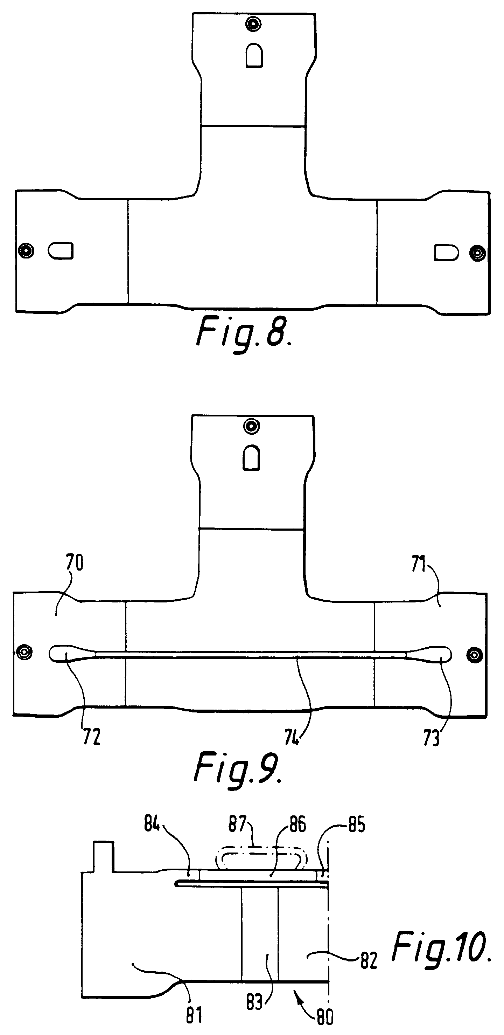

Figures 8 and 9 show the use of the invention to produce tee couplers using three electrofusion fittings. In Figure 9 the in-line fittings 70, 71 have their longitudinally-disposed terminals 72, 73 connected by a bus-bar 74 for simultaneous powering.

Figure 10 shows the use of the bus-bar connecting rod between the longitudinally-disposed terminals to form a carrying handle. The illustrated coupler 80 comprises two electrofusion fittings 81 and 82 butt fused to a short length of pipe 83. Their longitudinally-disposed terminals 84, 85 are connected by a bus bar 86, which comprises a plastic-covered metal rod. The bus bar, which is rotatable about its axis, has attached thereto a handle 87. By rotation of the bus bar, the handle can lay flat against the coupler until required.

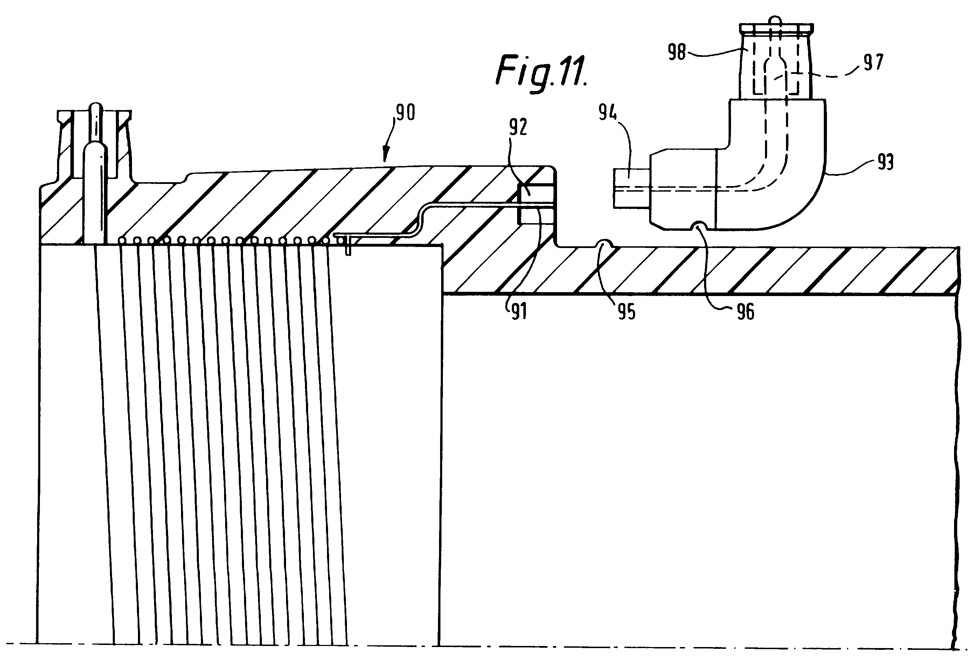

Figure 11 shows an electrofusion fitting 90 similar to that of Figure 1, except that the longitudinally-disposed terminal 91 is positioned in a recessed socket 92. An elbow adaptor terminal 93 has a connector 94 at one end, which can be inserted in the socket 92 to make an electrical connection to the terminal 91. The elbow adaptor is retained in the socket by the cooperating lug 95 and recess 96 on the fitting and elbow adaptor respectively. At the end of the elbow adaptor remote from the connector 94 is an upstanding radially-disposed terminal 97 surrounded by a cylindrical boss member 98. The elbow adaptor thus converts the electrofusion fitting into a standard configuration with two upstanding radially directed terminals.

## Claims

1. A composite electrofusion pipe fitting which comprises:
a plurality of hollow thermoplastic sleeve members, at least two of the sleeve members each having an electrical heating element located about the inner wall thereof, the said electrical heating elements being electrically connected together; and
the sleeve members being joined to each other so as to leave those sleeve members provided with electric heating elements available to receive pipes therein to be joined thereto by electrofusion.

2. A composite electrofusion pipe fitting according to Claim 1, which comprises a junction, a tee, a bend, a reducer, or a coupler and in which the sleeve members are joined by melt fusion.

3. A composite electrofusion pipe fitting according to Claim 1 or 2, in which sleeve members provided with electrical heating elements are joined to one or more sleeve members without electric heating elements.

4. A composite electrofusion pipe fitting according to any of the preceding claims, in which the electrical heating elements are linked by a conductive bus bar.

5. A composite electrofusion pipe fitting according to Claim 4, in which the bus bar also acts as a carrying handle, or has a carrying handle attached thereto.

6. A composite electrofusion pipe fitting according to any preceding claim, in which the connection between the sleeve members is by melt fusion.

7. A composite electrofusion pipe fitting according to any preceding claim in which electrical terminals of the electrical heating elements are disposed on an outer major surface of the hollow sleeve member, at least one such electrical terminal being disposed so as to lie in a substantially longitudinal direction with respect to the hollow sleeve member.

8. A composite electrofusion pipe fitting according to Claim 6, in which at least one hollow sleeve member comprises at least two regions of different diameter separated by a "step" region.

9. A composite electrofusion pipe fitting according to Claim 8, in which the electrical heating element of said at least one hollow sleeve member is disposed substantially entirely within the region of larger diameter.

10. An electrofusion pipe fitting according to Claims 6 and 9, in which the region of smaller diameter is adapted to be connected to another hollow member by melt fusion.

11. A composite electrofusion pipe fitting according to any of Claims 7 to 10, in which the longitudinally disposed electrical terminal is positioned at a region of the hollow sleeve member where a change in diameter of the sleeve member occurs.

12. A composite electrofusion pipe fitting according to any of Claims 7 to 11, in which the longitudinally disposed electrical terminal is provided with a seal located at a region of the hollow sleeve member which is outside the pressure containing region of the pipe fitting.

13. A composite electrofusion pipe fitting according to Claim 11 or 12, in which a bus-bar from the electrical heating element extends substantially longitudinally from the larger diameter region of the sleeve member, through the wall of the sleeve member to the longitudinally-disposed electrical terminal situated at the outer surface of the sleeve member.

14. A composite electrofusion pipe fitting according to any of Claims 7 to 13, in which one or both of the terminals are positioned such that a portion of each terminal lies outside of the wall of the respective sleeve member.

15. A composite electrofusion pipe fitting according to any of Claims 7 to 14, in which each of the terminals is surrounded by a protective boss member.

16. A composite electrofusion pipe fitting according to any of Claims 7 to 15, in which the pipe fitting has an upstanding radially directed terminal situated adjacent an end thereof.

17. A method of making a composite pipe fitting as claimed in any preceding claim, which method comprises:
injecting molten thermoplastic polymeric material into a mould cavity defining a hollow sleeve member and formed by a hollow outer mould and a mould core, at least one electrical terminal being disposed in the mould so as to lie in a substantially longitudinal direction with respect to the hollow sleeve member and being connected to a heating element disposed in the mould;
allowing the thermoplastic polymeric material to solidify;
removing the moulded hollow sleeve member from the hollow outer mould by relative axial movement therebetween; connecting together at least two of said hollow members and interconnecting said heating elements.

18. A method to according to Claim 17, in which the molten thermoplastic material is injected into the mould cavity in a longitudinal direction.

19. A method according to Claim 17 or 18, in which the hollow sleeve member has an upstanding radially directed terminal situated adjacent an end of the member and withdrawal of the moulded member is accomplished by withdrawing that said end first.

20. A method according to any of Claims 17 to 19, in which the outer mould has recesses defining boss members for the terminals of the fitting, at least one of said recesses being longitudinally or axially inclined with respect to the moulded sleeve member so as to permit longitudinal or axial withdrawal of the moulded sleeve member from the mould.

21. A method according to any of Claims 17 to 20, in which the electrical heating element is supported upon a metal former before placement in the mould.

22. A method according to any of Claims 17 to 21 in which the connection between sleeve members is by melt fusion and in which a further component in the form of a pipe or bend is disposed between them.

23. A method according to any of Claims 17 to 22, in which it is the longitudinally-disposed electrical terminals of the electrofusion pipe fitting which are linked.

24. A composite electrofusion pipe fitting according to any of Claims 7 to 16, in which the electrofusion pipe fitting is provided with an elbow adaptor terminal which can plug into the longitudinally-disposed electrical terminal so as to convert the electrofusion pipe fitting into a fitting having two upstanding electrical terminals.

## Patentansprüche

1. Zusammengesetztes Elektroschweiß-Rohrverbundteil, mit:
einer Anzahl von hohlen thermoplastischen Muffenbauteilen, wobei zumindest zwei der Muffenbauteile jeweils ein elektrisches Heizelement haben, das um die Innenwand davon angeordnet ist, wobei die elektrischen Heizelemente elektrisch miteinander verbunden sind; und
die Muffenbauteile so miteinander verbunden sind, um solche Muffenbauteile, die mit elektrischen Heizelementen versehen sind, zu hinterlassen, die brauchbar sind, um Rohre darin aufzunehmen, die durch Elektroschweißen mit diesen zu verbinden sind.

2. Zusammengesetztes Elektroschweiß-Rohrverbundteil nach Anspruch 1, das ein Verbindungs-Teil, ein T-Teil, ein Knie-Teil, ein Reduzier-Teil oder ein Kupplungs-Teil umfaßt, und bei dem die Muffenbauteile durch Schmelz-Verschweißen verbunden sind.

3. Zusammengesetztes Elektroschweiß-Rohrverbundteil nach Anspruch 1 oder 2, bei dem die Muffenbauteile, die mit elektrischen Heizelementen versehen sind, mit einem oder mehreren Muffenbauteilen ohne elektrische Heizelemente verbunden sind.

4. Zusammengesetztes Elektroschweiß-Rohrverbundteil nach einem der vorhergehenden Ansprüche, bei dem die elektrischen Heizelemente durch eine konduktive Sammelschiene verbunden sind.

5. Zusammengesetztes Elektroschweiß-Rohrverbundteil nach Anspruch 4, bei dem die Sammelschiene außerdem als ein Trag-Handgriff dient oder einen daran angebrachten Trag-Handgriff aufweist.

6. Zusammengesetztes Elektroschweiß-Rohrverbundteil nach einem der vorgehenden Ansprüche, bei dem die Verbindung zwischen den Muffenbauteilen durch Schmelz-Verschweißen erfolgt.

7. Zusammengesetztes Elektroschweiß-Rohrverbundteil nach einem der vorgehenden Ansprüche, bei dem elektrische Anschlüsse der elektrischen Heizelemente an einer äußeren Hauptfläche des hohlen Muffenbauteils angeordnet sind, wobei zumindest ein solcher elektrischer Anschluß so angeordnet ist, um im wesentlichen in einer Längsrichtung bezüglich des hohlen Muffenbauteils zu liegen.

8. Zusammengesetztes Elektroschweiß-Rohrverbundteil nach Anspruch 6, bei dem zumindest ein hohles Muffenbauteil zumindest zwei Abschnitte unterschiedlichen Durchmessers hat, die durch einen "Stufen"-Abschnitt getrennt sind.

9. Zusammengesetztes Elektroschweiß-Rohrverbundteil nach Anspruch 8, bei dem das elektrische Heizelement von dem zumindest einen hohlen Muffenbauteil im wesentlichen vollständig in dem Abschnitt des größeren Durchmessers angeordnet ist.

10. Eletroschweiß-Rohrverbundteil nach Anspruch 6 oder 9, bei dem der Abschnitt des kleineren Durchmessers dazu ausgestaltet ist, um durch Schmelz-Verschweißen mit einem anderen hohlen Bauteil verbunden zu werden.

11. Zusammengesetztes Eletroschweiß-Rohrverbundteil nach einem der Ansprüche 7 bis 10, bei dem der in Längsrichtung angeordnete elektrische Anschluß an einem Abschnitt des hohlen Muffenbauteils angeordnet ist, in dem eine Veränderung des Durchmessers des Muffenbauteils stattfindet.

12. Zusammengesetztes Elektroschweiß-Rohrverbundteil nach einem der Ansprüche 7 bis 11, bei dem der in Längsrichtung angeordnete elektrische Anschluß mit einer Versiegelung versehen ist, die in einem Abschnitt des hohlen Muffenbauteils angeordnet ist, der außerhalb des Druck aufnehmenden Abschnittes des Rohrverbundteils gelegen ist.

13. Zusammengesetztes Elektroschweiß-Rohrverbundteil nach Anspruch 11 oder 12, bei dem eine Sammelschiene von dem elektrischen Heizelement im wesentlichen in Längsrichtung von dem Abschnitt größeren Durchmessers des Muffenbauteils durch die Wand des Muffenbauteils bis zu dem in Längsrichtung angeordneten elektrischen Anschluß verläuft, der an der Außenfläche des Muffenbauteils angeordnet ist.

14. Zusammengesetztes Elektroschweiß-Rohrverbundteil nach einem der Ansprüche 7 bis 13, bei dem ein oder beide Anschlüsse so angeordnet sind, daß ein Bereich von jedem Anschluß außerhalb der Wand des zugehörigen Muffenbauteils gelegen ist.

15. Zusammengesetztes Elektroschweiß-Rohrverbundteil nach einem der Ansprüche 7 bis 14, bei dem jeder der Anschlüsse von einem schützenden Vorsprung-Bauteil umgeben ist.

16. Zusammengesetztes Eletroschweiß-Rohrverbundteil nach einem der Ansprüche 7 bis 15, bei dem das Rohrverbundteil einen hochstehenden, sich radial erstreckenden Anschluß aufweist, der benachbart zu einem Ende davon angeordnet ist.

17. Verfahren zur Herstellung eines zusammengesetzten Rohrverbundteils nach einem der vorhergehenden Ansprüche, wobei das Verfahren umfaßt:
Einleiten von geschmolzenem, thermoplastischen Polymermaterial in einen Formenhohlraum, durch den ein hohles Muffenbauteil definiert ist und der durch eine hohle Außenform und einen Formenkern gebildet ist, wobei zumindest ein elektrischer Anschluß in der Form angeordnet ist, um im wesentlichen in einer Längsrichtung bezüglich des hohlen Muffenbauteils zu liegen und mit einem Heizelement verbunden zu sein, das in der Form angeordnet ist;
Ermöglichen, daß sich das thermoplastische Polymermaterial verhärtet;
Entfernen des geformten hohlen Muffenbauteils aus der hohlen Außenform durch relative axiale Bewegung dazwischen; Verbinden von zumindest zwei der hohlen Bauteile miteinander und Verbinden der Heizelemente miteinander.

18. Verfahren nach Anspruch 17, bei dem das geschmolzene thermoplastische Material in einer Längsrichtung in den Formenhohlraum eingeleitet wird.

19. Verfahren nach Anspruch 17 oder 18, bei dem das hohle Muffenbauteil einen hochstehenden, sich radial erstreckenden Anschluß hat, der benachbart zu einem Ende des Bauteils angeordnet ist, und bei dem das Entnehmen des geformten Bauteils erfolgt, indem dieses Ende zuerst entnommen wird.

20. Verfahren nach einem der Ansprüche 17 bis 19, bei dem die Außenform Aussparungen hat, durch die Vorsprung-Bauteile für die Anschlüsse des Verbundteils gebildet werden, wobei zumindest eine dieser Aussparungen in Längs- oder Achsenrichtung bezüglich des geformten Muffenbauteils geneigt ist, um eine Entnahme des geformten Muffenbauteils aus der Form in Längs- oder Achsenrichtung zu ermöglichen.

21. Verfahren nach einem der Ansprüche 17 bis 20, bei dem das elektrische Heizelement vor Anordnung in der Form auf einer Metall-Halterung abstützend gehalten wird.

22. Verfahren nach einem der Ansprüche 17 bis 21, bei dem die Verbindung zwischen den Muffenbauteilen durch Schmelz-Verschweißen erfolgt und bei dem eine weitere Komponente in der Form eines Rohres oder Krümmung dazwischen angeordnet wird.

23. Verfahren nach einem der Ansprüche 17 bis 22, bei dem es die in Längsrichtung angeordneten elektrischen Anschlüsse des Elektroschweiß-Rohrverbundteils sind, die verbunden werden.

24. Zusammengesetztes Elektroschweiß-Rohrverbundteil nach einem der Ansprüche 7 bis 16, bei dem das Elektroschweiß-Rohrverbundteil mit einem Knie-Adapteranschluß versehen ist, der an den in Längsrichtung angeordneten elektrischen Anschluß angeschlossen werden kann, um so das Elektroschweiß-Rohrverbundteil in ein Verbundteil umzuwandeln, das zwei hochstehende elektrische Anschlüsse hat.

## Revendications

1. Raccord de tuyaux composite soudable par électrofusion, qui comprend :
plusieurs manchons thermoplastiques creux, au moins deux des manchons ayant chacun un élément chauffant électrique disposé autour de sa paroi interne, lesdits éléments chauffants électriques étant connectés électriquement entre eux ; et
les manchons étant assemblés entre eux de manière à laisser les manchons munis d'éléments chauffants électriques libres de recevoir des tuyaux devant leur être joints par électrofusion.

2. Raccord de tuyaux composite soudable par électrofusion selon la revendication 1, qui comprend une jonction, un té, un coude, un réducteur ou un coupleur, et dans lequel les manchons sont assemblés par soudage par fusion.

3. Raccord de tuyaux composite soudable par électrofusion selon la revendication 1 ou 2, dans lequel les manchons munis d'éléments chauffants électriques sont assemblés avec un ou plusieurs manchons dépourvus d'éléments chauffants électriques.

4. Raccord de tuyaux composite soudable par électrofusion selon l'une quelconque des revendications précédentes, dans lequel les éléments chauffants électriques sont connectés par une barre bus conductrice.

5. Raccord de tuyaux composite soudable par électrofusion selon la revendication 4, dans lequel la barre bus sert également de poignée de transport, ou comporte une poignée de transport qui lui est attachée.

6. Raccord de tuyaux composite soudable par électrofusion selon l'une quelconque des revendications précédentes, dans lequel l'assemblage des manchons est réalisé par soudage par fusion.

7. Raccord de tuyaux composite soudable par électrofusion selon l'une quelconque des revendications précédentes, dans lequel les bornes électriques des éléments chauffants électriques sont disposées sur une surface extérieure principale du manchon creux, au moins l'une de ces bornes électriques étant disposée de manière à se tenir dans une direction sensiblement longitudinale par rapport au manchon creux.

8. Raccord de tuyaux composite soudable par électrofusion selon la revendication 6, dans lequel au moins un manchon creux comprend au moins deux régions de diamètres différents séparées par une région de "palier".

9. Raccord de tuyaux composite soudable par électrofusion selon la revendication 8, dans lequel l'élément chauffant électrique dudit au moins un manchon creux est disposé sensiblement en totalité dans la région de plus grand diamètre.

10. Raccord de tuyaux composite soudable par électrofusion selon les revendications 6 et 9, dans lequel la région de plus petit diamètre est adaptée pour être jointe à un autre manchon creux par soudage par fusion.

11. Raccord de tuyaux composite soudable par électrofusion selon l'une quelconque des revendication 7 à 10, dans lequel la borne électrique disposée longitudinalement est placée dans une région du manchon creux où se présente un changement de diamètre du manchon.

12. Raccord de tuyaux composite soudable par électro fusion selon l'une quelconque des revendications 7 à 11, dans lequel la borne électrique disposée longitudinalement est munie d'un joint d'étanchéité situé dans une région du manchon creux qui est extérieure à la région tenant la pression du raccord de tuyaux.

13. Raccord de tuyaux composite soudable par électrofusion selon la revendication 11 ou 12, dans lequel une barre bus provenant de l'élément chauffant électrique s'étend sensiblement longitudinalement à partir de la région de plus grand diamètre du manchon, à travers la paroi du manchon, jusqu'à la borne électrique disposée longitudinalement située à la surface extérieure du manchon.

14. Raccord de tuyaux composite soudable par électrofusion selon l'une quelconque des revendications 7 à 13, dans lequel une ou chacune des deux bornes sont disposées de telle manière qu'une partie de chaque borne se trouve à l'extérieur de la paroi du manchon correspondant.

15. Raccord de tuyaux composite soudable par électrofusion selon l'une quelconque des revendications 7 à 14, dans lequel chacune des bornes est entourée par un bossage protecteur.

16. Raccord de tuyaux composite soudable par électrofusion selon l'une quelconque des revendications 7 à 15, dans lequel le raccord de tuyaux comporte une borne érigée orientée radialement située tout près d'une de ses extrémités.

17. Procédé de fabrication d'un raccord de tuyaux composite tel que revendiqué dans l'une quelconque des revendications précédentes, procédé dans lequel :
on injecte une matière polymère thermoplastique fondue dans une cavité de moule définissant un manchon creux et formée par un moule extérieur creux et un noyau de moule, au moins une borne électrique étant disposée dans le moule de manière à se tenir dans une direction sensiblement longitudinale par rapport au manchon creux et étant connectée à un élément chauffant disposé dans le moule ;
on laisse la matière polymère thermoplastique se solidifier ;
on enlève le manchon creux moulé du moule extérieur creux par un mouvement axial relatif entre eux ; on assemble entre eux au moins deux desdits manchons creux et l'on interconnecte lesdits éléments chauffants.

18. Procédé selon la revendication 17, dans lequel la matière thermoplastique fondue est injectée dans la cavité de moule dans une direction longitudinale.

19. Procédé selon la revendication 17 ou 18, dans lequel le manchon creux comporte une borne érigée orientée radialement située tout près d'une extrémité du manchon et l'enlèvement du manchon moulé est exécuté en dégageant cette extrémité en premier.

20. Procédé selon l'une quelconque des revendications 17 à 19, dans lequel le moule extérieur comporte des évidements définissant des bossages pour les bornes du raccord, au moins l'un de ces évidements étant incliné longitudinalement ou axialement par rapport au manchon moulé afin de permettre un dégagement longitudinal ou axial du manchon moulé du moule.

21. Procédé selon l'une quelconque des revendications 17 à 20, dans lequel l'élément chauffant électrique est supporté par un gabarit métallique avant la mise en place dans le moule.

22. Procédé selon l'une quelconque des revendications 17 à 21, dans lequel la liaison des manchons est réalisé par soudage par fusion et dans lequel une autre pièce constituante sous la forme d'un tuyau ou d'un coude est disposée entre eux.

23. Procédé selon l'une quelconque des revendications 17 à 22, dans lequel ce sont les bornes électriques disposées longitudinalement du raccord de tuyaux soudable par électrofusion qui sont connectées.

24. Raccord de tuyaux composite soudable par électrofusion selon l'une quelconque des revendications 7 à 16, dans lequel le raccord de tuyaux soudable par électrofusion est muni d'une borne d'adaptation coudée qui peut s'enficher dans la borne électrique disposée longitudinalement afin de convertir le raccord de tuyaux soudable par électrofusion en un raccord ayant deux bornes électriques terminales érigées.
